Europäisches Patentamt

European Patent Office

Office européen des brevets

(19)

(11) **EP 0 515 252 B1**

(12) **FASCICULE DE BREVET EUROPEEN**

(45) Date de publication et mention
de la délivrance du brevet:
**04.09.1996 Bulletin 1996/36**

(51) Int Cl.⁶: **G01S 17/46**, G01D 5/30

(21) Numéro de dépôt: **92401338.6**

(22) Date de dépôt: **15.05.1992**

(54) **Dispositif d'acquisition de la position angulaire instantanée d'un moyen mobile, et systèmes opto-mécaniques intégrant un tel dispositif**

Vorrichtung zum Erfassen der augenblicklichen Winkeleinstellung eines beweglichen Objekts und opto-mechanisches System mit solcher Vorrichtung

Device for acquisition of the instantaneous angular position of a moving element, and opto-mechanical system comprising such device

(84) Etats contractants désignés:
**DE FR GB IT NL**

(30) Priorité: **24.05.1991 FR 9106274**

(43) Date de publication de la demande:
**25.11.1992 Bulletin 1992/48**

(73) Titulaire: **THOMSON-TRT DEFENSE
78280 Guyancourt (FR)**

(72) Inventeurs:
• **Benchetrit, Thierry
F-92045 Paris la Défense (FR)**
• **Rollin, Joel
F-92045 Paris la Défense (FR)**
• **Bourgeois, Jean-Claude
F-92045 Paris la Défense (FR)**

(74) Mandataire: **Lincot, Georges et al
THOMSON-CSF,
SCPI,
B.P. 329,
50, rue Jean-Pierre Timbaud
92402 Courbevoie Cédex (FR)**

(56) Documents cités:
**EP-A- 0 143 687          GB-A- 2 079 561
US-A- 4 127 781**

• **OPTICAL ENGINEERING. vol. 26, no. 12, Décembre 1987, BELLINGHAM US pages 1245 - 1250; M. RIOUX ET AL.: 'Design of a large depth of view three-dimensional camera for robot vision'**

## Description

La présente invention concerne un dispositif d'acquisition de la position angulaire d'un moyen mécanique mobile, ainsi que les systèmes opto-mécaniques intégrant de tels dispositifs.

La présente invention est particulièrement destinée à la réalisation de caméra thermique à balayage. Elle n'est cependant pas limitée à une telle application, et est susceptible d'être mise en oeuvre dans de nombreux systèmes opto-mécaniques tels que des scanners, des systèmes d'imagerie, de projection laser ou de mécanismes asservis.

On connait en particulier dans l'art antérieur des caméras thermiques conçues par la demanderesse, mettant en oeuvre des moyens de recopie et d'asservissement du miroir de balayage. Ces moyens permettent d'asservir avec précision l'orientation d'un miroir trame par rapport à la dent de scie pilote. La précision de la recopie influe particulièrement sur la qualité de l'image et sur les performances du matériel, une modification de l'amplitude de balayage ou un défaut de linéarité du mouvement en rotation se traduisant par une anamorphose ou conduisant à des déformations de l'image inacceptables.

Le capteur de recopie doit par ailleurs détecter les dérives de l'axe optique du miroir de balayage, en particulier lorsque la caméra thermique est utilisée en repérage et visée de cible pour le tir et le guidage de missiles.

Dans l'art antérieur, le système d'acquisition de la position instantanée d'un miroir de balayage met en oeuvre un premier capteur de recopie angulaire et un deuxième capteur de recopie de référence.

Le premier capteur comprend une source lumineuse constituée par une diode émettrice, d'une optique de collimation, d'un diaphragme de forme particulière apte à linéariser la réponse du capteur, un miroir accolé au dos du miroir de balayage et d'un détecteur photosensible présentant deux quadrants complémentaires. Le faisceau collimaté à l'infini frappe les deux quadrants après réflexion sur le miroir solidaire de la face arrière du miroir de balayage.

Le flux reçu par chacun des deux quadrants accolés varie en fonction de la position angulaire du miroir de balayage. En effet, lorsque le miroir se trouve en une position médiane, chacun des quadrants reçoit un flux lumineux identique. Par contre, lorsque le miroir est décalé de sa position médiane, l'un des quadrants ne reçoit le flux lumineux que sur une partie de sa surface, alors que le quadrant complémentaire reçoit un flux lumineux sur la totalité de sa surface. La tension aux bornes du premier quadrant est en conséquence inférieure à la tension de sortie du quadrant complémentaire, et un circuit analogique approprié délivre un signal correspondant à la différence des tension de sortie.

Les dérives des signaux résultant des variations de la puissance d'émission sont compensées par un asservissement de la puissance de la source en fonction de la somme des tensions délivrées par les deux cellules. La forme géométrique des quadrants est particulièrement importante, car toute variation se traduirait par un défaut de linéarité de la réponse du détecteur photosensible. Par ailleurs, il est clair que les dimensions de chacun des quadrants doivent être sensiblement égale à la moitié du chemin balayé par le faisceau réfléchi, ce qui entraîne obligatoirement l'emploi de cellules photorésistives pour la réalisation de chacun des quadrants. Compte tenu des dimensions relativement importantes de ce détecteur photosensible, il est difficile d'éviter des dérives dûes à des courbes de réponse différentes pour les deux quadrants et aux variations thermiques s'exerçant sur ces derniers.

En outre, pour permettre l'exploitation du dispositif pour toute la course du miroir mobile, le faisceau doit avoir une largeur correspondant sensiblement aux dimensions du détecteur. En effet, les capteurs de l'art antérieur fonctionnent selon un principe de mesure différentielle de flux. Il est donc indispensable que, quelque soit la position du faisceau réfléchi, chacun des quadrants reçoive une partie du faisceau réfléchi. La source lumineuse doit en conséquence présenter une puissance suffisante pour que le flux du faisceau réfléchi soit compatible avec une réponse correcte des deux quadrants photorésistifs, même lorsque seule une faible partie du quadrant est éclairé, comme cela se produit lorsque le moyen mobile occupe une position extrême. De ce fait, la consommation énergétique du système de l'art antérieur est significative.

D'autre part, pour compenser les dérives du premier capteur, il est nécessaire de disposer d'un deuxième capteur qui à pour rôle de mémoriser la valeur instantanée de la valeur du signal délivré par le premier capteur, lorsque le miroir occupe une position de référence. Cette tension est ensuite réinjectée dans la boucle d'asservissement pour compenser les dérives éventuelles.

Les moyens connus dans l'art antérieur présentent divers inconvénients. En particulier, le système de recopie de l'art antérieur nécessite un ajustage mécanique très précis des différents composants, et est de ce fait relativement sensible aux variations thermiques. En outre, il requiert des composants spécifiques coûteux, tels que des capteurs photosensibles sélectionnés et appariés, ou des diodes électroluminescentes spécifiques. Par ailleurs, afin d'augmenter la précision du deuxième capteur, on met en oeuvre des réflexions multiples pour créer un bras de levier optique. Cette solution entraîne des difficultés de réglage et de mise au point.

D'autres solutions ont été envisagées dans l'art antérieur. Certaines mettent en oeuvre des capteurs inductifs ou potentiométriques. Ces solutions ne sont toutefois pas totalement satisfaisantes car elles compliquent notablement les systèmes d'entraînement du miroir de balayage et par ailleurs n'offrent pas une précision suffisante.

On connaît également des brevets EP-A-0143687 et US-4127781 des systèmes de repérage de la position angulaire d'un dispositif mécanique tel qu'un miroir de balayage. Ces brevets mettent en oeuvre des systèmes photosensibles de type CCD, mais ne décrivent pas de moyens pour délivrer un signal de consigne afin de s'affranchir des dérives d'axe.

L'objet de la présente invention est de remédier à ces différents inconvénients en proposant un dispositif d'acquisition de la position angulaire d'un moyen mécanique mobile autour d'un axe du type comportant une source lumineuse émettant un faisceau incident de direction connue, une surface réfléchissante solidaire du moyen mobile, une barrette de détection de type CCD du faisceau réfléchi par ladite surface réfléchissante, caractérisé en ce que la barrette CCD est disposée de façon à être au moins en partie balayée par le faisceau réfléchi pendant les mouvements du moyen mobile, ladite barrette CCD étant formée par un alignement d'une pluralité de capteurs élémentaires à transfert de charges jointifs, chacun des capteurs de dimension sensiblement inférieure à la longueur de la zone balayée par le faisceau réfléchi, en ce que le dispositif comporte des moyens optiques pour limiter la largeur du faisceau incident, en ce que des moyens pour délivrer un signal de référence sont constitués par une lame semi-réfléchissante fixe disposée entre la source lumineuse et la surface réfléchissante solidaire du moyen mobile, ladite lame semi-réfléchissante fixe renvoyant une partie du faisceau incident sur l'unique barrette de capteurs à transfert de charges, et en ce que ladite barrette est associée à un circuit électronique délivrant un signal numérique variant en fonction de la position définie par le nombre de capteurs élémentaires éclairés par le faisceau réfléchi.

Ce mode de réalisation est particulièrement avantageux en ce que le signal délivré par le dispositif est de type numérique, et se prête donc facilement à des traitements permettant de linéariser le signal d'asservissement, et de compenser différents types de dérives. En outre, la réalisation mécanique du dispositif selon l'invention ne nécessite pas d'ajustages et de réglages complexes, et admet une tolérance de fabrication significative, qui pourra être compensée par le traitement informatique des signaux délivrés par la barrette de capteurs à transfert de charge, communément désigné par "barrette CCD".

La simplification mécanique résulte également du fait que l'on n'utilise plus qu'un seul élément photosensible, alors que dans l'art antérieur le premier capteur présentait des dérives qu'il était nécessaire de compenser par l'exploitation d'un signal de référence délivré par un deuxième capteur dont le positionnement et l'ajustage étaient particulièrement délicats en raison de l'importance du bras de levier optique mis en oeuvre.

De plus, le dispositif selon l'invention permet l'emploi d'un faisceau lumineux produisant sur le détecteur une tache quasi-ponctuelle, puisqu'il ne met pas en oeuvre un procédé de mesure différentiel de flux. De ce fait, il permet de réduire de façon significative la puissance de la source lumineuse et donc la consommation électrique.

Les moyens pour délivrer un signal de référence peuvent être constitués par un calculateur délivrant un signal fonction de l'intégration du signal de position pendant une période de plusieurs cycles de mouvement du moyen mobile. Ce mode de réalisation permet de simplifier la réalisation mécanique du dispositif. Par ailleurs, l'utilisation d'un même composant - la barrette CCD - pour détecter le faisceau réfléchi en vue d'une part de l'acquisition de la position angulaire du moyen mobile et d'autre part de la délivrance du signal de référence évite tout risque de déréglage ou de dérive du signal de référence par rapport au signal de position.

Selon une variante, la lame semi-réfléchissante réfléchit le faisceau incident sur la portion utile de la barrette, la discrimination entre les signaux de position et de référence se faisant par traitement numérique du signal généré par ladite barrette.

Selon une variante avantageuse, les moyens optiques pour limiter la largeur du faisceau incident sont constitués par une fente disposée entre la source lumineuse et la lame semi-réflechissante fixe. La source lumineuse produit ainsi un faisceau dont la section est de forme sensiblement elliptique. De préférence, la largeur du faisceau est ajustée de façon à produire une tache la moins large possible sur la barrette de capteurs. Le flux lumineux est ainsi exploité de façon optimale et en conséquence la puissance de la source lumineuse peut être réduite sans pour autant affecter la qualité du signal délivré par la barrette CCD. Cette réduction de puissance est un avantage important pour les applications embarquées où la réduction de la consommation électrique est recherchée. Cette réduction de la consommation du dispositif selon l'invention par rapport aux dispositifs de l'art antérieur est particulièrement significative car le faisceau peut être extrêmement ponctuel sans affecter la précision ni la reproductibilité du signal d'asservissement généré par la barrette CCD et les circuits électroniques associés. De ce fait, le dispositif selon l'invention est particulièrement bien adapté pour les applications embarquées, par exemple pour l'asservissement du miroir de balayage de caméras thermiques embarquées dans des aéronefs ou des satellites.

Compte tenu de la forme allongée de la tache, un défaut d'alignement de la source lumineuse n'entraîne pas de conséquence importance quant à la validité du signal ou de sa définition.

Afin d'optimiser la largeur de la tache lumineuse projetée par le faisceau réfléchi sur la barrette de capteur, la largeur a de la fente est sensiblement égale à :

$$a = \sqrt{2\lambda D}$$

. D désigne la distance optique entre la fente et la barrette de capteurs ;

désigne la longueur d'onde de la source lumineuse.

Par "sensiblement égale", on entend que la largeur de la fente correspond à la valeur susmentionnée plus ou moins les tolérances d'usinage et/ou de fabrication habituelle. Dans ces conditions, les effets de diffractions par les bords de la fente sont minimisés.

De préférence, la surface réfléchissante renvoyant le faisceau incident en direction de la barrette CCD est constituée par une partie de la surface inexploitée du moyen mobile. On s'affranchit ainsi des inconvénients relatifs à la préparation d'un miroir supplémentaire et à sa solidarisation avec la pièce en mouvement. En outre, ce mode de réalisation permet de réduire l'inertie du système mobile.

La présente invention concerne également l'application du dispositif pour l'asservissement du miroir de balayage oscillant d'un système opto-mécanique, en particulier des caméras thermiques, des scanners ou des systèmes de projection laser.

La présente invention sera mieux comprise à la lecture de la description qui suit, concernant un mode de réalisation particulier faisant référence aux dessins annexés où:

- la figure 1 représente une vue schématique du dispositif selon l'invention;
- la figure 2 représente une vue en coupe transversale du dispositif selon l'invention ;
- la figure 3 représente une vue selon une coupe AA′ du faisceau incident à une échelle agrandie.

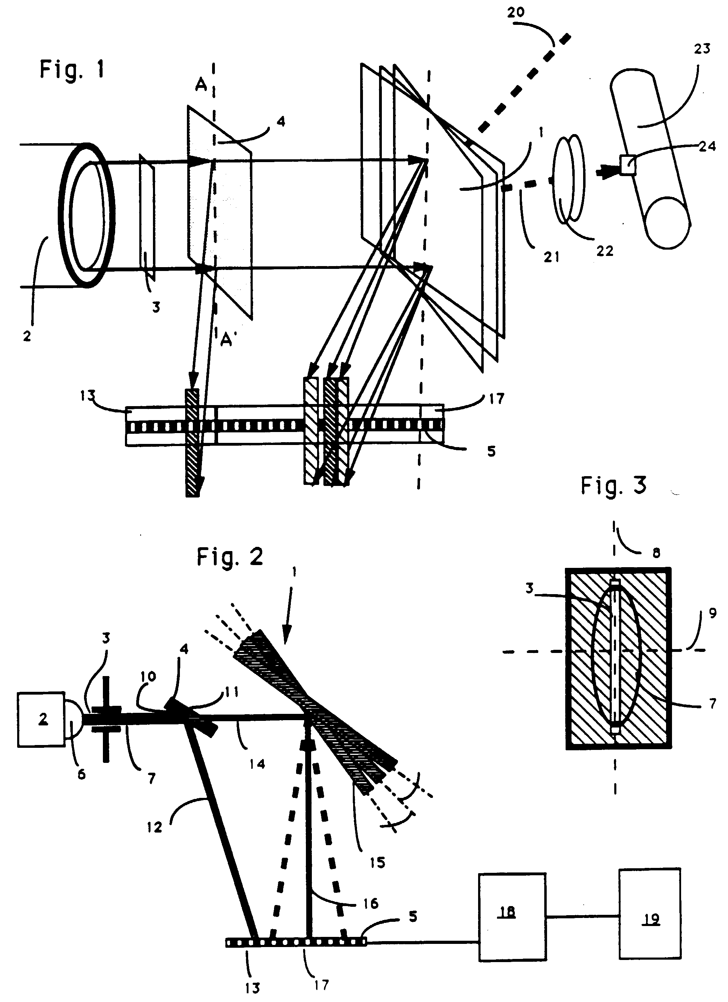

Le dispositif selon l'invention, dont un exemple de réalisation est illustré par les figures 1 et 2, comporte un miroir de balayage (1) qui constitue le moyen mobile dont on veut connaître la position angulaire en temps réel, et dont on veut asservir les mouvements. Ce miroir de balayage est animé par un mouvement vibratoire d'une fréquence d'environ 50 hertz et d'une amplitude de ± 10° par rapport à une position centrale.

Une camera thermique comporte habituellement un détecteur infrarouge (23) refroidi par un fluide à basse température contenu dans un réservoir (24). Le champ observé est balayé par un miroir ligne et un miroir trame associés à des circuits électroniques de synchronisation. Le faisceau incident (20) correspondant à un point analysé est réfléchi par le miroir de balayage (1). Le faisceau (21) réfléchi par ledit miroir de balayage est ensuite concentré par une optique (22) appropriée sur le détecteur infrarouge (23). Chacun des miroirs de balayage trame et ligne comporte des moyens de recopie permettant de connaître à tout moment sa position angulaire avec précision, afin de restituer une image sans déformation.

Les moyens de recopie sont constitués par une source lumineuse (2), une fente calibrée (3), une lame semi-réfléchissante (4) et une barrette de capteurs photosensibles (5).

La source lumineuse (2) est constituée par une diode laser émettant un faisceau visible d'une longueur d'onde de 675 nm, d'une puissance de sortie d'environ 1mW modulable. Elle comporte une lentille optique (6) et génère un faisceau lumineux dont la divergence est inférieure à 0,9 mrad selon l'axe principal de propagation et de 0,3 mrad selon l'axe secondaire perpendiculaire à l'axe principal. L'axe principal est perpendiculaire au plan formé par l'axe de propagation du faisceau incident (7) et par l'axe de propagation du faisceau réfléchi (16), afin que la tache formée par le faisceau réfléchi (16) sur la barrette CCD (5) soit allongée selon une direction sensiblement perpendiculaire à l'axe principal de ladite barrette.

La figure 3 représente une vue en section du faisceau incident (7) au niveau de la fente (3). Avant son passage à travers la fente (3), la section du faisceau est sensiblement elliptique, la dimension mesurée selon le grand axe OY (8) étant de l'ordre de 4,5 mm et selon le petit axe OX (9) d'environ 1 mm. L'éclairement au niveau de la fente répond à une courbe de type gaussienne elliptique.

Après la mise en forme par la fente (3), le faisceau incident est scindé en deux par un miroir semi-réflechissant (4) comportant une face avant (10) traitée anti-reflet et une face arrière (11) dont le facteur de transmission est d'environ 0,5. Ce mode de réalisation permet d'éviter les doubles réflexions qui perturberaient le fonctionnement du dispositif d'acquisition.

Une partie du faisceau (12) est réfléchie par la lame semi-réfléchissante (4) en direction d'une première zone (13) de la barrette CCD (5) dite zone de référence. La position de l'impact de ce faisceau réfléchi (12) sur la première zone (13) est représentative de la direction du faisceau incident (7) et le signal correspondant permet donc de compenser des défauts d'alignement, des variations du positionnement mécanique ou des variations thermiques d'axe de la source lumineuse (2).

La deuxième partie (14) du faisceau, non déviée par la lame semi-réfléchissante (4), est réfléchie par le dos (15) du miroir de balayage (1). Le miroir (1) est représenté en figure 1 et en figure 2 dans une position médiane ainsi que dans les deux positions extrêmes, les traits pointillés représentant la direction du faisceau réfléchi (7) lorsque le miroir de balayage (1) occupe une position extrême. Dans un mode de réalisation particulier, le dos du miroir de balayage (1) est usiné et présente des stries parallèles au plan contenant le faisceau incident et le faisceau réfléchi, pour constituer un réseau de diffraction éventuellement exploitable. Le faisceau incident (14) est réfléchi par la surface réfléchissante (15) du miroir de balayage (1) en direction de la barrette de capteurs photosensibles (5).

Cette barrette présente dans l'exemple décrit 1024 pixels ou capteurs élémentaires d'une dimension de 13 µm x 13 µm, et une bande passante optique comprise entre 400 nm et 1100 nm. A titre d'exemple, la barrette peut être constituée par le composant commercialisé par la société THOMSON sous la référence TH7804 (Z). Le faisceau réfléchi (16) forme sur la barrette (5) une tache lumineuse positionnée sur la zone utile (17), la position de ladite tache variant en fonction de la position angulaire du miroir de balayage (1). Dans l'exemple décrit, la répartition des pixels est de 224 pour la zone de référence (13) et le reste, soit environ 800, pour la zone utile (17).

Les taches lumineuses formées d'une part par le faisceau réfléchi par la lame semi-réfléchissante (4) et d'autre part par le miroir de balayage (1) présentent une largeur de plusieurs pixels. La détermination du centre de chaque tache s'effectue par un traitement numérique des signaux délivrés par la barrette CCD (5), le traitement numérique consistant en un calcul de type barycentrique.

La barrette (5) est reliée à un circuit électronique (18) délivrant la ou les tensions d'alimentation de la barrette CCD (5) ainsi que les différents signaux nécessaires à son exploitation (horloge d'échantillonage). Le circuit électronique comporte également un comparateur de seuil, ou, dans le cas d'un traitement en parallèle, plusieurs comparateurs de seuil, délivrant un signal binaire correspondant à la réponse de chaque capteur élémentaire. Pour les capteurs élémentaires éclairés par le faisceau réfléchi (16), le circuit délivrera un signal d'une première valeur, et pour les capteurs élémentaires qui ne sont pas éclairés par le faisceau réfléchi (16), il délivrera un signal d'une seconde valeur. Le circuit électronique (18) délivrera un signal de sortie numérique constitué par un mot binaire comportant un nombre de bits correspondant aux nombre de capteurs élémentaires, plus éventuellement des bits de contrôle. Dans l'exemple décrit, le signal de sortie sera constitué par un mot de 1024 bits plus les bits de contrôle. Ce signal est traité par une unité de calcul (19) déterminant le barycentre de chacune des taches selon un algorithme dont l'Homme du Métier trouvera de nombreux exemples dans le domaine public. Le comparateur de seuil permet de s'affranchir des variations du flux lumineux fourni par la source lumineuse (2).

Afin d'optimiser le dispositif et de réduire la puissance lumineuse nécessaire, la largeur des taches doit être minimisée. La largeur des taches dépend directement de la largeur de la fente (3). Les causes d'élargissement du faisceau sont pour l'essentiel:

- sa propre divergence ;
- la diffraction au niveau de la fente
- l'image géométrique de la fente de collimation.

Pour une source lumineuse du type considéré, la divergence propre est de 0,9 milliradians. Le diamètre de la tache laser est donc égal à:

$$\varnothing_{div} = \alpha.D$$

où:

- $\alpha$ désigne la divergence propre de la source laser
- D désigne la distance entre la source laser et la barrette CCD

Le diamètre de la tache de diffraction provoquée par la fente est déterminé par la formule :

$$\varnothing_{diff} = \frac{2\lambda D}{a}$$

où :

- $\lambda$ désigne la longueur d'onde du faisceau laser ;
- D désigne la distance entre la source laser et la barrette CCD ;
- a désigne la largeur de la fente.

Enfin, le diamètre de la tache résultant de la géométrie de la fente correspond à la largeur de la fente, soit:

$$\varnothing_{image} = a.$$

Au total, le diamètre de la tache au niveau de la barrette sera inférieur ou égal à la somme des trois paramètres exposés dans ce qui précède, soit:

$$L = \varnothing_{diff.} + \varnothing_{image} + \varnothing_{div.}$$

soit:

$$\frac{2\lambda D}{a} + a + \alpha D - L = 0$$

Formellement, la solution de cette équation du second degré est:

$$a_{1,2} = \frac{L - \alpha D \pm \sqrt{\Delta}}{2}$$

avec

$$\Delta = (\alpha D - L)^2 - 8\lambda D$$

Le but étant de réduire autant que possible le diamètre L de la tache formée sur la barrette, on choisira le discriminant nul et donc :

$$L = \alpha D \pm \sqrt{8\lambda D}$$

(bien entendu, seul la solution positive a une signification)

La valeur D dépend de l'encombrement du dispositif. A titre d'exemple :

- $\alpha = 0,9$ mrad (divergence de la diode laser) ;
- D = 26 mm (distance entre la fente et la barrette CCD) ;
- $\lambda = 675$ nm (longueur d'onde de la diode laser).

En conséquence, L = 399 µm.
D'où on en déduit la largeur optimal de la fente:

$$a \approx 200 \mu m$$

En résumé, dans l'exemple décrit dans ce qui précède, la largeur optimale de la fente (3) est d'environ 200 µm, et la dimension de la tache qui en résulte est d'environ 400 µm, et couvre donc environ 30 pixels.

Un autre paramètre influant directement sur la qualité du dispositif est la puissance de la source lumineuse. Il faut qu'elle soit suffisante pour obtenir une bonne réponse des pixels de la barrette CCD, sans pour autant atteindre des valeurs de saturations desdits barrettes.

La puissance d'émission des diodes laser peut être ajustée. Elle est déterminée par un calcul de flux lumineux arrivant sur la barrette en fonction des dimensions de la fente, des caractéristiques de la lame semi-réfléchissante et de la surface réfléchissante ainsi que des caractéristiques de la diode laser et de la barrette CCD.

L'invention est décrite dans ce qui précède à titre d'exemple non limitatif. Il est bien entendu que l'Homme de Métier sera à même de réaliser de nombreuses variantes sans pour autant sortir du cadre de l'invention.

En particulier, la répartition des pixels de la barrette CCD en deux zones, l'une de référence, l'autre de mesure, peut être remplacée par l'utilisation de deux barrettes CCD indépendantes, l'une servant exclusivement à l'établissement d'un signal de référence, l'autre servant exclusivement à l'acquisition de la position de la tache formée par le faisceau réfléchi. Ce mode de réalisation peut être envisagé lorsque des contraintes d'encombrement et de forme rendent difficile l'emploi d'une barrette CCD de grande dimension.

Par ailleurs, dans le mode de réalisation décrit, le dispositif d'acquisition est optiquement isolé du système d'imagerie par le miroir de balayage. On évite ainsi la perturbation du fonctionnement de la barrette CCD. Il est toutefois possible d'utiliser la surface utile du miroir de balayage dans les cas où la puissance du faisceau produit par la source lumineuse est nettement supérieure à l'éclairage ambiant, ou lorsque la longueur d'onde de la source lumineuse (2) est sensiblement différente de la bande passante du système d'imagerie.

## Revendications

1. Dispositif d'acquisition de la position angulaire d'un moyen mécanique mobile (1) autour d'un axe du type comportant une source lumineuse (2) émettant un faisceau incident (7) de direction connue, une surface réfléchissante (15) solidaire du moyen mobile (1), une barrette de détection de type CCD du faisceau réfléchi par ladite surface réfléchissante, caractérisé en ce que la barrette CCD (5) est disposée de façon à être au moins en partie balayée par le faisceau réfléchi (16) pendant les mouvements du moyen mobile (1), ladite barrette CCD (5) étant formée par un alignement d'une pluralité de capteurs élémentaires à transfert de charges jointifs, chacun des capteurs de dimension sensiblement inférieure à la longueur de la zone balayée par le faisceau réfléchi (16), en ce que le dispositif comporte des moyens optiques (3) pour limiter la largeur du faisceau incident (7), en ce que des moyens pour délivrer un signal de référence sont constitués par une lame semi-réfléchissante fixe (4) disposée entre la source lumineuse (2) et la surface réfléchissante (15) solidaire du moyen mobile (1), ladite lame semi-réfléchissante fixe (4) renvoyant une partie (12) du faisceau incident (7) sur l'unique barrette de capteurs à transfert de charges (5), et en ce que ladite barrette (5) est associée à un circuit électronique (18, 19) délivrant un signal numérique variant en fonction de la position définie par le nombre de capteurs élémentaires éclairés par le faisceau réfléchi (16).

2. Dispositif d'acquisition de la position angulaire d'un moyen mécanique mobile autour d'un axe selon la revendication 1, caractérisé en ce qu'il comporte un circuit électronique (18) comportant au moins un comparateur de seuil délivrant un signal d'une première valeur pour les capteurs élémentaires éclairés par le faisceau réfléchi (16) et un signal d'une deuxième valeur pour les capteurs élémentaires non éclairés par ledit faisceau réfléchi (16).

3. Dispositif d'acquisition de la position angulaire d'un moyen mécanique mobile autour d'un axe selon l'une quelconque des revendications précédentes caractérisé en ce que les moyens pour limiter la largeur du faisceau incident (7) sont constitués par une fente (3) disposée entre la source lumineuse (2) et la lame semi-réfléchissante (4) fixe, l'axe principal de ladite fente (3) étant orienté perpendiculairement au plan formé par le faisceau incident (7) et le faisceau réfléchi (16).

4. Dispositif d'acquisition de la position angulaire d'un moyen mécanique mobile autour d'un axe selon la revendication 3 caractérisé en ce que la largeur a de la fente (3) est sensiblement égale à :

$$a = \sqrt{2\lambda D}$$

où :

. D désigne la distance optique entre la fente et la barrette de capteurs ;

. λ désigne la longueur d'onde de la source lumineuse.

5. Dispositif d'acquisition de la position angulaire d'un moyen mécanique mobile autour d'un axe selon l'une quelconque des revendications précédentes caractérisé en ce que la surface réfléchissante (15) est constituée par une partie de la surface inexploitée du moyen mobile (1).

6. Application du dispositif conforme à l'une quelconque des revendications précédentes pour la réalisation d'une caméra thermique du type comportant un miroir de balayage asservi en position.

7. Application du dispositif conforme à l'une quelconque des revendications 1 à 5 pour la réalisation d'un scanner du type comportant un miroir à balayage asservi en position.

8. Application du dispositif conforme à l'une quelconque des revendications 1 à 5 pour la réalisation d'un système de projection laser du type comportant un miroir de balayage asservi en position.

**Patentansprüche**

1. Vorrichtung zur Erfassung der Winkelstellung eines um eine Achse beweglichen mechanischen Elements (1), mit einer Lichtquelle (2), die einen Strahl (7) bekannter Richtung aussendet, mit einer reflektierenden Fläche (15), die mit dem beweglichen Element (1) gekoppelt ist, mit einer Ladungstransfer-Detektorleiste vom Typ CCD zur Erfassung des von der reflektierenden Fläche reflektierten Strahls (16), dadurch gekennzeichnet, daß die CCD-Leiste (5) so angeordnet ist, daß sie mindestens zum Teil durch den reflektierten Strahl (16) während der Bewegungen des beweglichen Elements (1) überstrichen wird, und aus einer fluchtenden Anordnung zahlreicher aneinander anliegender Elementarzellen mit Ladungstransfer besteht, wobei jede Zelle deutlich kleinere Abmessungen als die Länge der vom reflektierten Strahl (16) überstrichenen Zone besitzt, daß die Vorrichtung optische Mittel (3) zur Begrenzung der Breite des ankommenden Strahls (7) besitzt, daß Mittel zur Erzeugung eines Referenzsignals von einem ortsfesten halbreflektierenden Plättchen (4) gebildet werden, das zwischen der Lichtquelle (2) und der mit dem beweglichen Element (1) gekoppelten reflektierenden Fläche (15) liegt und einen Teil (12) des ankommenden Lichtstrahls (7) auf die gemeinsame Leiste von Ladungstransfersonden (5) umlenkt, und daß die Leiste (5) mit einer elektronischen Schaltung (18, 19) verbunden ist, die ein digitales Signal liefert, das abhängig von der durch die Anzahl der durch den reflektierten Strahl (16) beleuchteten Elementarzellen definierten Lage variiert.

2. Vorrichtung zur Erfassung der Winkelstellung eines um eine Achse beweglichen mechanischen Elements nach Anspruch 1, dadurch gekennzeichnet, daß sie eine elektronische Schaltung (18) mit mindestens einem Schwellwertkomparator aufweist, der ein Signal eines ersten Werts für die vom reflektierten Strahl (16) beleuchteten Elementarzellen und ein Signal eines zweiten Werts für die vom reflektierten Strahl (16) nicht beleuchteten Elementarzellen liefert.

3. Vorrichtung zur Erfassung der Winkelstellung eines um eine Achse beweglichen mechanischen Elements nach einem beliebigen der vorhergehenden Ansprüche, dadurch gekennzeichnet, daß die Mittel zur Begrenzung der Breite des ankommenden Strahls (7) von einem Schlitz (3) gebildet werden, der zwischen der Lichtquelle (2) und dem ortsfesten halbreflektierenden Plättchen (4) liegt, wobei die Hauptachse des Schlitzes (3) senkrecht zu der vom ankommenden Strahl (7) und dem reflektierten Strahl (16) gebildeten Ebene ausgerichtet ist.

4. Vorrichtung zur Erfassung der Winkelstellung eines um eine Achse beweglichen mechanischen Elements nach Anspruch 3, dadurch gekennzeichnet, daß die Breite a des Schlitzes (3) im wesentlichen folgendem Wert gleicht:

$$a = \sqrt{2\lambda D}$$

wobei D den optischen Abstand zwischen dem Schlitz und der CCD-Leiste und $\lambda$ die Wellenlänge der Lichtquelle bedeutet.

5. Vorrichtung zur Erfassung der Winkelstellung eines um eine Achse beweglichen mechanischen Elements nach einem beliebigen der vorhergehenden Ansprüche, dadurch gekennzeichnet, daß die reflektierende Fläche (15) von einem nicht genutzten Bereich der Oberfläche des beweglichen Elements (1) gebildet wird.

6. Anwendung der Vorrichtung nach einem beliebigen der vorhergehenden Ansprüche auf die Herstellung einer thermischen Kamera, die einen hinsichtlich seiner Lage nachgeregelten Ablenkspiegel enthält.

7. Anwendung der Vorrichtung nach einem beliebigen der Ansprüche 1 bis 5 auf die Herstellung eines Scanners, der einen hinsichtlich seiner Lage nachgeregelten Ablenkspiegel enthält.

8. Anwendung der Vorrichtung nach einem beliebigen der Ansprüche 1 bis 5 auf die Herstellung eines Laserprojektionssystems, das einen hinsichtlich seiner Lage nachgeregelten Ablenkspiegel enthält.

**Claims**

1. Device for the acquisition of the angular position of a mechanical means (1) which can move about an axis of the type including a light source (2) emitting an incident beam (7) of known direction, a reflecting surface (15) integral with the mobile means (1), a linear CCD-type array for detecting the beam reflected by the said reflecting surface, characterized in that the linear CCD array (5) is arranged in such a way that it is at least partly scanned by the reflected beam (16) during the movements of the mobile means (1), the said linear CCD array (5) being formed by an alignment of a plurality of adjacent elementary charge-coupled sensors, each of the sensors being of dimension substantially less than the length of the zone scanned by the reflected beam (16), in that the device includes optical means (3) for limiting the width of the incident beam (7), in that means for delivering a reference signal consist of a fixed semi-reflecting plate (4) arranged between the light source (2) and the reflecting surface (15) integral with the mobile means (1), the said fixed semi-reflecting plate (4) returning a part (12) of the incident beam (7) onto the single linear array of charge-coupled sensors (5), and in that the said linear array (5) is associated with an electronic circuit (18, 19) delivering a digital signal that varies as a function of the position defined by the number of elementary sensors illuminated by the reflected beam (16).

2. Device for the acquisition of the angular position of a mechanical means which can move about an axis, according to Claim 1, characterized in that it includes an electronic circuit (18) including at least one threshold comparator delivering a signal of a first value for the elementary sensors illuminated by the reflected beam (16) and a signal of a second value for the elementary sensors not illuminated by the said reflected beam (16).

3. Device for the acquisition of the angular position of a mechanical means which can move about an axis, according to either one of the preceding claims, characterized in that the means for limiting the width of the incident beam (7) consist of a slit (3) arranged between the light source (2) and the fixed semi-reflecting plate (4), the principal axis of the said slit (3) being oriented perpendicularly to the plane formed by the incident beam (7) and the reflected beam (16).

4. Device for the acquisition of the angular position of a mechanical means which can move about an axis, according to Claim 3, characterized in that the width a of the slit (3) is substantially equal to:

$$a = \sqrt{2\lambda D}$$

where:

. D denotes the optical distance between the slit and the linear array of sensors;
. $\lambda$ denotes the wavelength of the light source.

5. Device for the acquisition of the angular position of a mechanical means which can move about an axis, according to any one of the preceding claims, characterized in that the reflecting surface (15) consists of a part of the unused surface of the mobile means (1).

6. Application of the device according to any one of the preceding claims for the production of a thermal camera of the type including a positionally controlled scanning mirror.

7. Application of the device according to any one of Claims 1 to 5 for the production of a scanner of the type including a positionally controlled scanning mirror.

8. Application of the device according to any one of Claims 1 to 5 for the production of a laser projection system of the type including a positionally controlled scanning mirror.

EP 0 515 252 B1

Fig. 1

Fig. 2

Fig. 3